# EUROPÄISCHE PATENTSCHRIFT

(11) **EP 0 765 203 B1**
(45) Veröffentlichungstag und Bekanntmachung des Hinweises auf die Patenterteilung: **31.03.1999**
(21) Anmeldenummer: 95924205.8
(22) Anmeldetag: 08.06.1995
(51) Int. Cl.: B23D 15/14

(54) **HYDRAULIKSTEUERUNG FÜR EINE TEILENDE WERKZEUGMASCHINE**
HYDRAULIC CONTROL SYSTEM FOR A CUTTING MACHINE TOOL
COMMANDE HYDRAULIQUE POUR MACHINE-OUTIL A DECOUPER

(30) Priorität: 14.06.1994 DE 4420682
(43) Veröffentlichungstag der Anmeldung: 02.04.1997
(73) Patentinhaber: Mannesmann Rexroth AG, 97816 Lohr am Main (DE); THYSSEN INDUSTRIE AG, 45128 Essen (DE)
(72) Erfinder: RAUSCH, Georg, D-97816 Lohr/Main (DE); WILKENS, Heinrich, D-30916 Isernhagen (DE); BIERMANN, Klaus, D-34277 Fuldabrück (DE); ZÖLLER, Georg, D-43128 Kassel (DE)
(86) Internationale Anmeldenummer: EP9502222
(87) Internationale Veröffentlichungsnummer: WO9534399

(56) Entgegenhaltungen:
- BE-A- 551 059
- GB-A- 546 875

## Beschreibung

Die Erfindung betrifft eine Hydrauliksteuerung für eine teilende Werkzeugmaschine gemäß dem Oberbegriff des Patentanspruchs 1.

Derartige Hydrauliksteuerungen sind insbesondere bei Scheren- oder Schneidpressen eingesetzt, mit denen Werkstücke auf vorbestimmte Längen gebracht werden. So sind beispielsweise Schrottscheren bekannt, mit denen Eisenbahnschienen vor dem Aufschmelzen oder Recyclen in Teilstücke geringer Länge unterteilt werden.

Bei derartigen Werkzeugmaschinen unterscheidet man im wesentlichen drei Teilhübe, wobei während des ersten Teilhubs (Schließhub) das Schneidwerkzeug geschlossen wird. Daran schließt sich dann der Arbeitshub an, bei dem das Werkstück durchtrennt wird und der letzte Teilhub betrifft die Rückbewegung, d.h. das Öffnen des Werkzeugs, um das Werkstück entnehmen oder nachführen zu können.

Um ein unkontrolliertes Absenken des Schneidwerkzeugs zu verhindern, wirkt während des Schließhubs ein Gegendruck auf den Arbeitskolben der Werkzeugmaschine, bei dem etwa das Eigengewicht der abzusenkenden Teile kompensiert wird.

Durch diese Maßnahme ist gewährleistet, daß sich das Werkzeug der Werkzeugmaschine nicht allein aufgrund des Eigengewichts absenkt, so daß die Hydraulikpumpe immer gegen den Gegenhaltedruck arbeiten muß, und somit der Hydraulikzylinder stets mit Hydraulikfluid gefüllt ist.

Während des Arbeitshubs, d.h. während des Durchschneidens des Werkstücks, wird der Gegenhaltedruck abgebaut, so daß die maximale Zylinderkraft für den eigentlichen Schneidvorgang ausgenutzt werden kann.

Beim Durchtrennen des Werkstücks wirkt der volle Hydraulikdruck weiter auf den Arbeitskolben, so daß dieser unmittelbar nach dem Durchtrennen beschleunigt wird, bis der Hydraulikdruck aufgrund der Steuerung der Werkzeugmaschine abgesenkt und die Rückbewegung des Werkzeugs eingeleitet wird. Dieses schlagartige Beschleunigen des Arbeitskolbens kann zu einem Abreißen der Ölsäule auf der Druckseite im Arbeitszylinder führen, so daß es zu einer unkontrollierten, schlagartigen Bewegung des Arbeitskolbens kommen kann. Diese schlagartige Geschwindigkeitsänderung des Arbeitskolbens wird auch als 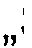 Schnittschlag" bezeichnet und kann zu Beschädigungen des Antriebs und der Hydraulikkomponenten der Werkzeugmaschine führen.

Demgegenüber liegt der Erfindung die Aufgabe zugrunde, eine Hydrauliksteuerung für eine teilende Werkzeugmaschine zu schaffen, mit der bei geringem vorrichtungstechnischem Aufwand eine unkontrollierte Bewegung des Arbeitskolbens verhindert werden kann.

Diese Aufgabe wird durch die Merkmale des Patentanspruchs 1 gelöst.

Vorteilhafte Ausgestaltung der erfindungsgemäßen Hydrauliksteuerung kann man den Unteransprüchen entnehmen.

Bei einer erfindungsgemäßen Hydrauliksteuerung wird dem Steuerraum hinter dem Hauptventilelement Steueröl am Ende des Arbeitshubes aus dem kolbenseitigen Zylinderraum des Arbeitszylinders zugeführt. In diesem Zylinderraum herrscht unmittelbar am Ende des Arbeitshubs ein hoher Druck, so daß das Druckgefälle zum Steuerraum hinter dem Hauptventilelement hoch ist und in kurzer Zeit eine große Steuerölmenge aus dem kolbenseitigen Zylinderraum in den Steuerraum fließt. Das Hauptventilelement bewegt sich deshalb schnell in Richtung Schließstellung, so daß sich im stangenseitigen Zylinderraum des Arbeitszylinders schnell ein Dämpfungsdruck aufbaut. Dadurch wird eine überaus wirksame Schnittschlagdämpfung erreicht.

Aus der GB-A 546 875 ist schon eine hydraulische Schere bekannt, die Arbeitszylinder aufweist, die über Ventile so ansteuerbar sind, daß ihre Arbeitskolben und Kolbenstangen in einem Schließhub und in einem Arbeitshub zum Werkstück hin und in einem Rückhub vom Werkstück weg verfahrbar sind. Während des Schließ- und Arbeitshubs sind die kolbenstangenseitigen Zylinderräume der Arbeitszylinder über ein Ventil, dessen Steuerkolben in Öffnungsrichtung mit dem Druck, der in den kolbenseitigen Zylinderräumen der Arbeitszylinder ansteht, und in Schließrichtung von einer Feder beaufschlagt ist, mit der zu den kolbenseitigen Zylinderräumen führenden Fluidleitung verbunden. Es ist damit eine Eilgangschaltung realisiert. Denn das aus den kolbenstangenseitigen Zylinderräumen verdränge Druckfluid wird nicht in einen Tank abgegeben, sondern fließt zusätzlich zu der von der Pumpe geförderten Fluidmenge den kolbenseitigen Zylinderräumen zu. Das Ventil drosselt den Ablauf von Druckfluid aus den kolbenstangenseitigen Zylinderräumen so stark an, daß dort ein Gegenhaltedruck aufgebaut wird, der in den kolbenseitigen Zylinderräumen zu einem Druck führt, der am Steuerkolben des Ventils der Kraft der Feder das Gleichgewicht hält. Das Ventil kann somit als direktgesteuertes Senkbremsventil angesehen werden.

Das Ventil ändert beim Übergang vom Schließhub zum Arbeitshub seine Schaltstellung nur insofern, als es wegen des Druckanstiegs in den kolbenseitigen Zylinderräumen ganz aufmacht, so daß der Druck in den kolbenstangenseitigen Zylinderräumen gleich dem Druck in den kolbenseitigen Zylinderräumen wird. Die Wirkfläche für den Druck entspricht während des Arbeitshubs also nur der Querschnittsfläche der Kolbenstange. Eine Entlastung der kolbenstangenseitigen Zylinderräume findet also nicht statt, so daß die ausübbare Schneidkraft begrenzt ist.

Kurs vor Ende des Arbeitshubs kann Druckfluid aus den kolbenstangenseitigen Zylinderräumen nur noch über ein in Serie zum Senkbremsventil angeordnetes Drosselventil verdrängt werden. Dadurch soll die Geschwindigkeit der Arbeitskolben verringert werden, um Schäden am Werkstück zu vermeiden. Damit wird aber auch der Arbeitshub zeitlich verlängert.

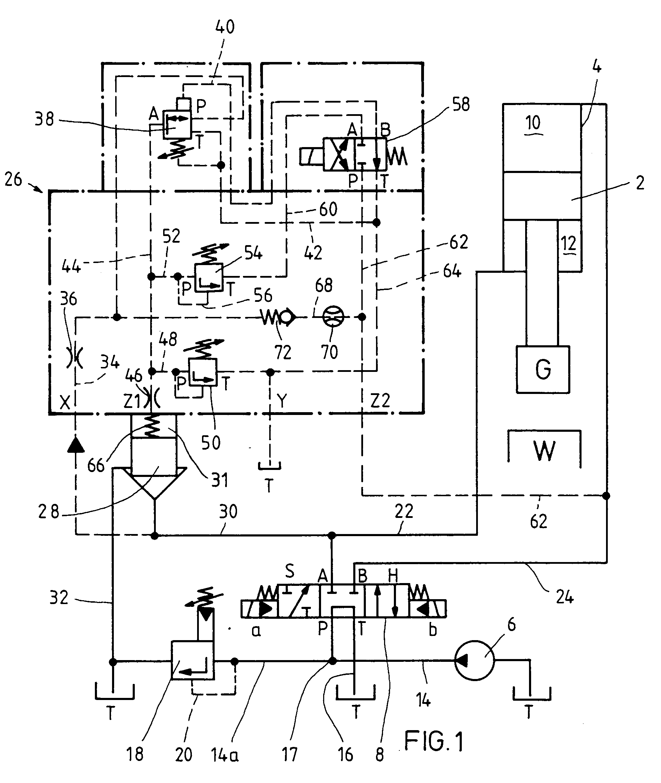

Ein Ausführungsbeispiel der Erfindung ist in einer einzigen Figur schematisch und schaltplanmäßig dargestellt. Anhand dieses Ausführungsbeispiels wird die Erfindung nun näher erläutert.

In der Figur ist ein Schaltschema einer erfindungsgemäßen Hydrauliksteuerung für eine Schrottschere gezeigt. Dabei wird ein in einem Arbeitszylinder 4 geführter Arbeitskolben 2 mittels einer Hydraulikpumpe 6 mit Hydraulikfluid versorgt, wobei über ein Wegeventil oder ähnliche Steuereinrichtungen, insbesondere ein Proportionalventil 8, die beiden Zylinderräume 10, 12 jeweils mit der Pumpe 6 oder mit einem Tank T verbindbar sind.

Dazu ist beim gezeigten Ausführungsbeispiel das Proportionalventil 8 als vorgesteuertes 4/3-Wegeventil ausgebildet, das über Elektromagneten a, b und/oder Vorsteuerventile ansteuerbar ist. In seiner in der Figur gezeigten Grundposition ist der Ventilschieber über zwei Federn in seine Neutralstellung vorgespannt.

Von der Hydraulikpumpe 6 führt ein Leitungsabschnitt 14 zu einem Anschluß P des Proportionalventils 8. Dieser Anschluß P ist in der Neutralstellung mit einem Anschluß T des Proportionalventils 8 verbunden, der seinerseits über eine Tankentlastungsleitung 16 mit dem Tank T verbunden ist.

Von einer Abzweigung 17 des Leitungsabschnitts 14 zweigt eine Abzweigleitung 14a ab, in der ein vorgesteuertes Druckbegrenzungsventil 18 geschaltet ist, dessen Öffnungsdruck einstellbar ist. Der in der Abzweigleitung 14a herrschende Druck wird über eine Steuerdruckleitung 20 an die Steuerseite des Druckbegrenzungsventils 18 geführt, so daß bei Überschreiten eines maximalen Drucks über das Druckbegrenzungsventil 18 eine Verbindung zum Tank T herstellbar ist und die Pumpe das Hydraulikfluid in den Tank T fördert, bis die Drucküberhöhung abgebaut ist.

Von der Ausgangsseite des Proportionalventils 8 führt eine Arbeitsleitung 22 (im folgenden als Rücklaufleitung 22 bezeichnet) weg von einem Anschluß A zu dem in der Figur unteren Zylinderraum 12. Eine weitere Arbeitsleitung 24 (im folgenden Zulaufleitung 24 genannt) führt von einem Anschluß B des Proportionalventils 8 zu dem in der Figur oberen Zylinderraum 10 des Arbeitszylinders 4.

Der Arbeitskolben 2 ist als Differentialkolben ausgebildet, wobei das Gewicht des Arbeitskolbens 2 und des Werkzeugs in der Figur mit G angedeutet ist.

In der gezeigten Neutralstellung des Ventils 8 sind die Anschlüsse A und B abgesperrt, während - wie bereits erwähnt - die Anschlüsse T und P miteinander verbunden sind, so daß das Hydraulikfluid in der Neutralstellung im Kreis in den Tank T gefördert wird (Konstantpumpe).

In der in der Figur mit H bezeichneten Heben-Stellung des Ventilschiebers des Proportionalventils 8 sind die Anschlüsse A, P bzw. B, T miteinander verbunden, so daß das Hydraulikfluid über den Leitungsabschnitt 14, die Anschlüsse P, A und die Rücklaufleitung 22 zum kolbenstangenseitigen Zylinderraum 12 gefördert wird, während das Hydraulikfluid aus dem kolbenseitigen Zylinderraum 10 über die Zulaufleitung 24, die Anschlüsse B, T und die Tankentlastungsleitung 16 in den Tank T abströmen kann. Dadurch wird der Arbeitskolben 2 in der Figur nach oben bewegt, so daß sich das Werkzeug der Werkzeugmaschine vom Werkstück W weg bewegt und die Schrottschere geöffnet wird.

In der Senken-Stellung S des Ventilschiebers sind die beiden Anschlüsse A und T abgesperrt, während die Anschlüsse P und B miteinander verbunden sind, so daß Hydraulikfluid über den Leitungsabschnitt 14, die Anschlüsse P, B und die Zulaufleitung 24 in den kolbenseitigen Zylinderraum 10 gefördert wird, um den Arbeitskolben 2 abzusenken (Schließhub). Um ein unkontrolliertes Absenken zu vermeiden, wird im kolbenstangenseitigen Zylinderraum 12 ein Gegenhaltedruck aufgebaut, der gegen den Pumpendruck in der Zulaufleitung 24 und im kolbenseitigen Zylinderraum 10 wirkt.

Der Gegenhaltedruck wird über eine im folgenden noch näher beschriebene vorgesteuerte Druckbegrenzungs-Ventileinrichtung mit einem Hauptventilelement 28 und einer Vorsteuerung 26 auf einen Wert begrenzt, der etwa 10 bis 20 % höher als der vom Gewicht G erzeugte Lastdruck ist.

Bei Überschreiten des voreingestellten Gegenhaltedrucks wird über das Hauptventilelement 28 der Ventileinrichtung 26, 28 eine Gegenhaltedruckleitung 30, die stromabwärts des Proportionalventils 8 von der Rücklaufleitung 22 abzweigt, mit einer zum Tank T führenden Verbindungsleitung 32 verbunden, so daß der Druck im kolbenstangenseitigen Zylinderraum 12 zum Tank T abbaubar ist und der voreingestellte Gegenhaltedruck eingehalten wird. Die Ansteuerung des Hauptventilelements 28, das in Schließrichtung von einer schwachen Feder 66 belastet ist, erfolgt über Vorsteuerventile, die im folgenden näher erläutert werden.

Die den Steuerdruck zur Ansteuerung des Hauptventilelements 28 realisierende Vorsteuerung 26 hat drei Anschlüsse X, Y und Z2, von denen der Anschluß X mit der Gegenhaltedruckleitung 30 der Rücklaufleitung 22 und dem kolbenstangenseitigen Zylinderraum 12, der Anschluß Y mit dem Tank T und der Anschluß Z2 mit der Zulaufleitung 24 und damit dem kolbenseitigen Zylinderraum 10 verbunden sind. Ein weiterer Anschluß Z1 führt in den Steuerraum 31 hinter dem Hauptventilelement 28.

Eine vom Eingangsanschluß X wegführende Steuerleitung 34 ist über eine Düse 36 zum Eingang P eines druckgesteuerten Schaltventils 38 geführt. Dieses ist über eine einstellbare Feder in eine den Anschluß P mit einem Ausgangsanschluß A verbindende Stellung (s. Figur) vorgespannt. Zur anderen Steuerseite des Schaltventils 38 ist eine Signaldruckleitung 40 geführt, so daß bei einem vorbestimmten Signaldruck der Ventilschieber des Schaltventils 38 gegen die Federvorspannung verschiebbar und der Anschluß A des Schaltventils 38 mit einem Anschluß T verbindbar ist, von dem eine Entlastungsleitung 42 zum Anschluß Y der Vorsteuerung 26 und damit zum Tank T führt. Die federvorgespannte Steuerseite des Schaltventils 38 ist zur Entlastungsleitung 42 hin druckentlastet.

Vom Ausgangsanschluß A des Schaltventils 38 führt ein Steuerdruck-Leitungsabschnitt 44 über eine Drossel 46 zum Anschluß Z1 der Vorsteuerung 26 und damit zum Steuerraum 31 am Hauptventilelement 28. Im Bereich zwischen der Drossel 46 und dem Anschluß A zweigt eine Abzweigleitung 48 ab, in die ein Maximaldruck-Begrenzungsventil 50 geschaltet ist, über das der Druck in der Abzweigleitung 48 und damit im Steuerdruck-Leitungsabschnitt 44 über den Anschluß Y in den Tank T entspannbar ist, sobald der voreinstellbare Maximalwert für den Steuerdruck im Steuerkreis erreicht ist.

Zwischen dem Anschluß A und der Abzweigleitung 48 zweigt eine weitere Abzweigleitung 52 ab, in der ein Steuerdruckbegrenzungsventil 54 vorgesehen ist. Dieses Steuerdruckbegrenzungsventil 54 ist ebenfalls durch eine Feder voreinstellbar. Der Gegenhaltedruck wird über eine von der weiteren Abzweigleitung 52 abzweigenden Steuerdruckleitung 56 zur Steuerseite des Steuerdruckbegrenzungsventils 54 geführt und wirkt an dessen Schließglied gegen die Feder. Bei Erreichen des eingestellten Gegenhaltedrucks wird das Schließglied in eine die Anschlüsse P und T des Steuerdruckbegrenzungsventils 54 miteinander verbindende Stellung gebracht, so daß der Druck im Steuerkreis durch Abfluß von Druckmittel über ein im folgenden noch ausführlich beschriebenes Schaltventil 58 und über den Anschluß Y in den Tank T des Hydraulikventils nicht größer als der eingestellte Wert werden kann.

Wie bereits oben erwähnt, wird der Gegenhaltedruck so eingestellt, daß er etwa 10 bis 20 % über dem vom Gewicht G erzeugten Lastdruck liegt. Üblicherweise liegt der Gegenhaltedruck damit etwa im Bereich von 100 bis 150 bar. Der über das Maximaldruck-Begrenzungsventil 50 zu schaltende Maximaldruck liegt wesentlich höher als dieser Gegenhaltedruck, der im wesentlichen über das Steuerdruckbegrenzungsventil 54 voreinstellbar ist.

Das o.g. Schaltventil 58 ist als elektromagnetisch betätigtes 4/2-Wegeventil ausgebildet, wobei der vom Anschluß T des Steuerdruckbegrenzungsventils 54 führende Steuerleitungsabschnitt 60 zu einem Anschluß A des Schaltventils 58 geführt ist. Die Steuerseite des Schaltventils 38 ist über die Signaldruckleitung 40 mit einem Anschluß B des Schaltventils 58 verbunden.

Der Druck in dem kolbenseitigen Zylinderraum 10 ist über eine Signaldruckleitung 62 zum Anschluß Z2 der Vorsteuerung 26 und weiter zu einem Anschluß P des Schaltventils 58 geführt. Von einem Tankanschluß T des Schaltventils 58 führt eine Entlastungsleitung 64 zum Anschluß Y der Vorsteuerung 26.

In seiner Ruhestellung ist der Ventilschieber des Schaltventils 58 durch Federvorspannung in eine Stellung vorgespannt, in der die Anschlüsse A und P gesperrt sind, während die Anschlüsse B und T miteinander verbunden sind, so daß der Steuerdruck an der in der Figur oberen Steuerseite des Schaltventils 38 über die Signaldruckleitung 40, die Anschlüsse B und T des Schaltventils 58, die Entlastungsleitung 64 und über den Anschluß Y der Vorsteuerung 26 in den Tank T abgebaut wird, so daß der Ventilschieber des Schaltventils 38 durch Federwirkung in seine die Anschlüsse A und P des Schaltventils 38 verbindende Stellung vorgespannt ist.

In der geschalteten Stellung des Ventilschiebers sind die Anschlüsse P, B einerseits und andererseits die Anschlüsse A, T des Schaltventils 58 miteinander verbunden. Dabei wird der Druck im kolbenseitigen Zylinderraum 10 über die Signaldruckleitung 62, die Anschlüsse P, B des Schaltventils 58 und die Signaldruckleitung 40 an die Steuerseite des Schaltventils 38 geführt und bringt bei Überschreitung einer bestimmten Druckhöhe dessen Steuerschieber gegen die Federvorspannung in seine die Anschlüsse A und T verbindende Stellung, in der der Druck im Steuerdruck-Leitungsabschnitt 44 und somit der Druck im Steuerraum 31 am Hauptventilelement 28 über die Anschlüsse A, T des Schaltventils 38, die Entlastungsleitungen 42, 64 und den Anschluß Y zum Tank T hin abbaubar ist. D.h., in dieser Schaltposition ist der Druck in der Leitung 30 alleine durch die geringe Vorspannung der Feder 66 bestimmt.

Von der Signaldruckleitung 62 zweigt eine Umgehungsleitung 68 ab, die zwischen der Drossel 36 und dem Schaltventil 38 in die Steuerdruckleitung 34 mündet.

In der Umgehungsleitung 68 sind eine Drossel 70 und ein Rückschlagventil 72 in Reihe geschaltet. Durch das Rückschlagventil 72 wird eine Fluidströmung von der Steuerdruckleitung 34 über die Umgehungsleitung 68 zur Signaldruckleitung 62 verhindert, während eine Strömung in Gegenrichtung beim Überschreiten eines durch die Federvorspannung des Rückschlagventils 72 vorgegebenen Drucks möglich ist. Somit kann über die Umgehungsleitung 68 der Druck im kolbenseitigen Zylinderraum 10 in den Steuerkreis zur Ansteuerung des Hauptventilelements 28 eingespeist werden.

Zum besseren Verständnis der Funktion werden im folgenden die Schaltvorgänge während des Schließhubs, des Arbeitshubs und der Rückbewegung des Arbeitskolbens 2 erläutert.

### Absenken des Arbeitskolbens 2 (Schließhub)

Zum Absenken des Arbeitskolbens 2 wird der Magnet a des Proportionalventils 8 bestromt, so daß der Ventilschieber des Proportionalventils 8 aus seiner Neutralstellung in die Stellung S verschoben wird. In dieser Stellung S sind, wie bereits erwähnt, die Anschlüsse P und B des Proportionalventils 8 miteinander verbunden, während die Anschlüsse A und T gesperrt sind. Dadurch wird Hydraulikfluid von der Pumpe 6 in den kolbenseitigen Zylinderraum 10 gefördert, so daß der Kolben abgesenkt wird. Das Absenken geschieht gegen einen Gegenhaltedruck im kolbenstangenseitigen Zylinderraum 12, der über das Hauptventilelement 28 und dessen Vorsteuerung 26 vorgegeben ist.

Dabei wird der dem Druck im Zylinderraum 12 entsprechende Steuerdruck über den Anschluß X der Vorsteuerung 26 zum Anschluß P des Schaltventils 38 geführt. Bei der Abwärtsbewegung des Arbeitskolbens 2 ist auch der Magnet des Schaltventils 58 bestromt, so daß sich der Ventilschieber dieses Ventils in derjenigen Stellung befindet, in der die Anschlüsse P, B bzw. A, T miteinander verbunden sind und an der Steuerseite des Schaltventils 38 der Druck im kolbenseitigen Zylinderraum 10 anliegt, der jedoch noch nicht ausreicht, um den Ventilschieber des Schaltventils 38 in seine die Anschlüsse A, T verbindende Stellung zu bringen. Dadurch sind die Anschlüsse A, P des Schaltventils 38 miteinander verbunden, so daß der Steuerdruck in der Steuerdruckleitung 34, den Anschlüssen A, P des Schaltventils 38, dem Steuerdruck-Leitungsabschnitt 44 und der Drossel 46 zum Steuerraum 31 am Hauptventilelement 28 geführt ist. Der Gegenhaltedruck beim Absenken des Arbeitskolbens 2 wird dann durch das Steuerdruckbegrenzungsventil 54 bestimmt, dessen Eingangsanschluß P über den Tankanschluß T und den Steuerleitungsabschnitt 60, die Anschlüsse A, T des Schaltventils 58 und den Anschluß Y mit dem Tank T verbindbar ist, falls der Gegenhaltedruck einen voreingestellten Wert erreicht.

### Arbeitshub (Durchtrennen des Werkstücks)

Sobald das Werkzeug der Schrottschere auf das Werkstück W auftrifft, steigt der Druck im kolbenseitigen Zylinderraum 10 stark an, wodurch sich auch der Steuerdruck in den Signaldruckleitungen 40, 62 erhöht, so daß der Ventilschieber des Schaltventils 38 aus seiner in der Figur gezeigten Position gegen die Federvorspannung in seine die Anschlüsse A und T verbindende Position gebracht wird und der Steuerdruck im Steuerdruck-Leitungsabschnitt 44 über die Entlastungsleitungen 42, 64 und den Anschluß Y in den Tank T entspannbar ist. Dadurch wird die in Schließrichtung auf das Hauptventilelement 28 wirkende Kraft allein durch die Feder 66 bestimmt, so daß aufgrund der vergleichsweise niedrigen Federvorspannung über das Hauptventilelement 28 der Druck in der Gegenhaltedruckleitung 30 in den Tank T abgebaut wird, und der Gegenhaltedruck auf nahe null absinkt und die volle Zylinderkraft zum Durchtrennen des Werkstücks W verwendet werden kann.

### Schnittschlagdämpfung

Beim Durchtrennen des Werkstücks W wirkt die volle Zylinderkraft auf den Arbeitskolben 2, so daß zur Verhinderung des vorbeschriebenen Schnittschlags schnellstmöglich ein Gegendruck aufgebaut werden muß.

Durch den schlagartigen Wegfall des durch das Werkstück aufgebrachten Widerstands sinkt der Druck im kolbenseitigen Zylinderraum 10 ab, wodurch auch der Steuerdruck an der Steuerseite des Schaltventils 38 absinkt und dieses wieder in seine in der Figur gezeigten Grundstellung bewegt wird, in der über den Ventilschieber die Anschlüsse A und P miteinander verbunden sind, so daß - wie vorbeschrieben - der im kolbenstangenseitigen Zylinderraum 12 herrschende Druck als Steuerdruck oder als Gegenhaltedruck im Steuerraum 31 am Hauptventilelement 28 aufgebaut werden kann. Der Aufbau dieses Gegenhaltedrucks erfolgt jedoch zu langsam, um eine wirksame Schnittschlagdämpfung zu gewährleisten. Um den Druckaufbau zu beschleunigen, wird über die Umgehungsleitung 68, die Drossel 70 und das Rückschlagventil 72 vom einen höheren Druck aufweisenden kolbenseitigen Zylinderraum 10 Steueröl in die Steuerdruckleitung 34 eingespeist, das über die Anschlüsse P, A des Schaltventils 38 und den Steuerdruck-Leitungsabschnitt 44, die Drossel 46 an den Anschluß Z1 und damit in den Steuerraum 31 am Hauptventilelement 28 geführt wird, so daß sich sehr schnell ein hinreichender Druck im Steuerraum 31 am Hauptventilelement 28 aufbaut, um die Verbindung zwischen der Gegenhaltedruckleitung 30 und der Verbindungsleitung 32 zum Tank T abzusperren. Durch die Wirkung des vergleichsweise hohen Drucks im kolbenseitigen Zylinderraum 10 kann somit das Hauptventilelement 28 sehr schnell in seine Schließstellung gebracht werden, so daß sich sehr schnell ein Gegendruck im kolbenstangenseitigen Zylinderraum 12 aufbauen kann.

Durch diese Maßnahme wird der Schnittschlag wirkungsvoll gedämpft, so daß einer Beschädigung und Überlastung der Bauelemente der Schrottschere beim Durchschneiden von Werkstücken vorgebeugt ist.

### Rückbewegung des Arbeitskolbens 2

Zur Rückbewegung des Arbeitskolbens 2 wird der Elektromagnet b des Proportionalventils 8 bestromt, so daß dessen Ventilschieber in die H-Stellung gebracht wird, in der die Anschlüsse A, P bzw. B, T miteinander verbunden sind. Desweiteren wird der Elektromagnet des Schaltventils 58 stromlos, so daß dessen Ventilschieber durch die Federvorspannung in die in der Figur gezeigten Neutralstellung gebracht wird, in der die Anschlüsse A und P gesperrt sind, während die Anschlüsse B und T miteinander verbunden sind. Dadurch wird die Steuerseite des Schaltventils 38 mit dem Tank T verbunden, so daß dessen Steuerschieber allein durch die Federvorspannung in der die Anschlüsse P, A verbindenden Stellung verbleibt.

Der vom Tankanschluß T wegführende Steuerleitungsabschnitt des Steuerdruckbegrenzungsventils 54 ist durch das Schaltventil 58 gesperrt, so daß sich im Steuerdruck-Leitungsabschnitt 44 und damit im Steuerraum 31 am Hauptventilelement 28 ein höherer Druck als der voreingestellte Gegenhaltedruck einstellen kann. Da in dieser Schaltposition der Druck am Eingang des Hauptventilelements 28 (Leitungsabschnitt 30) und im Steuerraum 31 gleich sind, wird das Hauptventilelement 28 durch die Wirkung der Feder 66 in seiner Schließstellung gehalten, in der die Verbindung zwischen der Gegenhaltedruckleitung 30 und der Verbindungsleitung 32 abgesperrt ist.

Somit kann von der Pumpe über die Anschlüsse P, A und die Rücklaufleitung 22 Hydraulikfluid in den kolbenstangenseitigen Zylinderraum 12 gefördert werden, so daß der Arbeitskolben 2 in seine in der Figur gezeigten Ausgangsstellung zurückbewegt wird. Das aus dem kolbenseitigen Zylinderraum 10 verdrängte Hydraulikfluid wird über die Zulaufleitung 24, die Anschlüsse B, T des Proportionalventils 8 und die Tankentlastungsleitung 16 in den Tank T abgeführt.

Selbstverständlich ist die gezeigte Schaltung derart erweiterbar, daß zur Bewältigung komplexerer Bearbeitungsaufgaben auch eine Steuerung zur differentialen Abwärtsbewegung des Arbeitskolbens realisierbar ist.

## Patentansprüche

1. Hydrauliksteuerung für eine teilende Werkzeugmaschine, insbesondere eine Schere oder eine Schneidpresse, mit einem über eine Ventileinrichtung (8) ansteuerbaren und in die eine Richtung in einem Schließhub und einem Arbeitshub und in die andere Richtung in einem Rückhub verfahrbaren Arbeitszylinder (4), der einen kolbenseitigen Zylinderraum (10) und einen kolbenstangenseitigen Zylinderraum (12) aufweist, aus dem Druckmittel über eine Rücklaufleitung (22) in einen Tank (T) verdrängbar ist, mit einer vorgesteuerten Druckbegrenzungs-Ventileinrichtung (26, 28), die in die Rücklaufleitung (22) eingebaut ist und die ein Hauptventilelement (28) aufweist, auf das in Öffnungsrichtung der Druck im kolbenstangenseitigen Zylinderraum (12) des Arbeitszylinders (4) und in Schließrichtung ein in einem Steuerraum (31) anstehender Steuerdruck wirkt, welcher Steuerraum (31) in einem Steuerkreis liegt, während des Schließhubs mit einem einem Gegenhaltedruck im kolbenstangenseitigen Zylinderraum (12) des Arbeitszylinders (4) entsprechenden und an einem Steuerdruckbegrenzungsventil (54), dem während des Schließhubs Steueröl über eine von der Rücklaufleitung (22) abzweigende Steuerleitung (34) von der Rücklaufleitung (22) aus zufließt, eingestellten Steuerdruck beaufschlagbar ist, während des Arbeitshubs über ein vom Druck im kolbenseitigen Zylinderraum gesteuertes Vorsteuerventil (38) von Steuerdruck entlastbar ist und am Ende des Arbeitshubs mit einem einem Dämpfungsdruck im kolbenstangenseitigen Zylinderraum (12) entsprechenden Steuerdruck beaufschlagbar ist,
dadurch gekennzeichnet, daß der dem Dämpfungsdruck entsprechende Steuerdruck durch Zufluß von Steueröl aus dem kolbenseitigen Zylinderraum (10) des Arbeitszylinders (4) über eine Umgehungsleitung (68) in den Steuerraum (31) aufbaubar ist und daß in der Umgehungsleitung (68) ein zum kolbenseitigen Zylinderraum (10) hin sperrendes Rückschlagventil (72) angeordnet ist.

2. Hydrauliksteuerung nach Anspruch 1, dadurch gekennzeichnet, daß in Reihe zu dem Rückschlagventil (72) eine Düse (70) in der Umgehungsleitung(68) angeordnet ist.

3. Hydrauliksteuerung nach Anspruch 1 oder 2, dadurch gekennzeichnet, daß eine Steuerseite des vom Druck im kolbenseitigen Zylinderraum (10) des Arbeitszylinders (4) gesteuerten Vorsteuerventils (38) mit einer zum kolbenseitigen Zylinderraum (10) führenden Zulaufleitung (24) verbindbar ist.

4. Hydrauliksteuerung nach einem vorhergehenden Anspruch, dadurch gekennzeichnet, daß im Steuerkreis zwischen dem Eingang des Steuerdruckbegrenzungsventils (54) und dem Steuerraum (31) am Hauptventilelement (28) eine Düse (46) angeordnet ist.

5. Hydrauliksteuerung nach einem vorhergehenden Anspruch, dadurch gekennzeichnet, daß in der von der Rücklaufleitung (22) abzweigenden Steuerleitung (34) eine Düse (36) angeordnet ist.

6. Hydrauliksteuerung nach Anspruch 5, dadurch gekennzeichnet, daß die Umgehungsleitung (68) stromabwärts der Düse (36) in die Steuerleitung (34) mündet.

7. Hydrauliksteuerung nach Anspruch 6, dadurch gekennzeichnet, daß das vom Druck im kolbenseitigen Zylinderraum (10) des Arbeitszylinders (4) gesteuerte Vorsteuerventil (38) ein Schaltventil ist, das den Steuerraum (31) am Hauptventilelement (28) in einer ersten Schaltstellung mit einem stromab der Einmündung der Umgehungsleitung (68) liegenden Abschnitt der Steuerleitung (34) und in einer zweiten Schaltstellung mit einer Entlastungsleitung (42) verbindet.

8. Hydrauliksteuerung nach einem vorhergehenden Anspruch, dadurch gekennzeichnet, daß das Haupventilelement (28) durch eine Feder (66) in seine Schließstellung vorgespannt ist.

9. Hydrauliksteuerung nach einem vorhergehenden Anspruch, dadurch gekennzeichnet, daß im Steuerkreis ein zweites Steuerdruckbegrenzungsventil (50) angeordnet ist, durch das der Steuerdruck auf einen über dem Wert, auf den das erste Steuerdruckbegrenzungsventil (54) eingestellt ist, liegenden Wert begrenzbar ist.

10. Hydrauliksteuerung nach einem vorhergehenden Anspruch, dadurch gekennzeichnet, daß im Steuerkreis ein als Schaltventil ausgebildetes weiteres Vorsteuerventil (58) vorhanden ist, das den Ausgang des Steuerdruckbegrenzungsventils (54) in einer ersten Schaltstellung mit einer Entlastungsleitung (64) verbindet und in einer während des Rückhubs des Arbeitszylinders (4) eingenommenen, zweiten Schaltstellung absperrt.

11. Hydrauliksteuerung nach Anspruch 10, dadurch gekennzeichnet, daß eine Steuerseite des vom Druck im kolbenseitigen Zylinderraum (10) des Arbeitszylinders (4) gesteuerten Vorsteuerventils (38) in der ersten Schaltstellung des weiteren Vorsteuerventils (58) mit einer zum kolbenseitigen Zylinderraum (10) führenden Zulaufleitung (24) und in der zweiten Schaltstellung des weiteren Vorsteuerventils (58) mit einer Entlastungsleitung (64) verbunden ist.

## Claims

1. Hydraulic control for a dividing machine tool, in particular for a shear or a cutting press, with a work cylinder (4) that is controllable via a valve device (8) and that can be moved in one direction in a closing stroke and a work stroke, and in the opposite direction in a return stroke, said work cylinder having a cylinder chamber (10) on the piston side and a cylinder chamber (12) on the piston rod side, wherein pressure medium can be forced from the cylinder chamber (12) on the piston rod side through a return line (22) into a tank (T), with a pilot operated pressure limiting valve device (26, 28) incorporated into the return line (22); the said pilot operated pressure limiting valve device having a main valve element (28) upon which, in an opening direction, the pressure in the cylinder chamber (12) on the piston rod side of the work cylinder (4) acts and in the closing direction a control pressure present in a control chamber (31) of the main valve element (28) acts; wherein said control chamber (31) is in a control circuit, said control chamber (31), during the closing stroke, being capable of being impacted by a control pressure that corresponds to a retaining pressure in the cylinder chamber (12) on the piston rod side of the work cylinder (4) and at a control pressure limiting valve (54) to which, during the closing stroke, control oil flows from the return line (22) through a control line (34) that branches off return line (22), and said control chamber (31) is capable of being relieved of the control pressure during the work stroke through a pilot valve (38) controlled by the pressure in the cylinder chamber (10) on the piston side, and said control chamber (31), at the end of the work stroke, is capable of being exposed to a control pressure that corresponds to a damping pressure in said cylinder chamber (12) on the piston rod side;
**characterized in that** the control pressure, corresponding to the damping pressure, is capable of being increased by an influx of control oil from the cylinder chamber (10) on the piston side of the work cylinder (4) through a bypass line (68) into the control chamber (31), and that a non-return valve (72) that has a blocking action towards the cylinder chamber (10) on the piston side is provided in the bypass line (68).

2. A hydraulic control according to Claim 1, **characterized in that** a nozzle (70) is located in the bypass line (68) and in series with the non-return valve (72).

3. A hydraulic control according to Claim 1 or 2, **characterized in that** a control side of the pilot valve (38) that is controlled by the pressure in the cylinder chamber (10) on the piston side of the work cylinder (4) can be connected with a supply line (24) that leads to the cylinder chamber (10) on the piston side.

4. A hydraulic control according to any of the preceding claims, **characterized in that** a nozzle (46) is located in the control circuit between the inlet of the control pressure limiting valve (54) and the control chamber (31) of the main valve element (28).

5. A hydraulic control according to any of the preceding claims, **characterized in that** a nozzle (36) is located in the control line (34) that branches off the return line (22).

6. A hydraulic control according to Claim 5, **characterized in that** the bypass line (68) debouches into the control line (34) downstream of said nozzle(36).

7. A hydraulic control according to Claim 6, **characterized in that** the pilot valve (38) that is controlled by the pressure in the cylinder chamber (10) on the piston side of the work cylinder (4) is a switching valve that, in a first switch position, connects the control chamber (31) of the main valve element (28) with a portion of the control line (34) that is located downstream from the inlet of the bypass line (68) and in a second switch position connects the control chamber (31) with a relief line (42).

8. A hydraulic control according to any of the preceding claims, **characterized in that** the main valve element (28) is biased by a spring (66) into its closed position.

9. A hydraulic control according to any of the preceding claims, **characterized in that** a second control pressure limiting valve (50) is located in the control circuit, by which valve the control pressure can be limited to a value that is above the value for which the first control pressure limiting valve (54) is set.

10. A hydraulic control according to any of the preceding claims, **characterized in that** an additional pilot valve (58) is provided in the control circuit and is designed as a switching valve, said additional pilot valve (58) connecting, in a first switch position, the outlet of control pressure limiting valve (54) with a relief line (64) and shutting it off in a second switch position occupied during the return stroke of the work cylinder (4).

11. A hydraulic control according to Claim 10, **characterized in that** a control side of the pilot valve (38) that is controlled by the pressure in the cylinder chamber (10) on the piston side of the work cylinder (4) is connected in the first switch position of the additional pilot valve (58) with a feed line (24) that leads to the cylinder chamber (10) on the piston side and in the second switch position of the additional pilot valve (58) is connected with a relief line (64).

## Revendications

1. Une commande hydraulique pour une machine-outil séparatrice, en particulier une cisaille ou une presse coupante, dotée d'un vérin (4) de travail qui peut être commandé à l'aide d'un dispositif (8) sous forme de valve, qui peut être amené à coulisser dans une course de fermeture et une course de travail dans un sens et dans une course de retour dans l'autre sens, et qui présente une chambre (10) de vérin côté piston ainsi qu'une chambre (12) de vérin côté tige de vérin, hors de laquelle du moyen de pression peut être refoulé vers un réservoir (T) au travers d'une ligne (22) de retour, dotée d'un dispositif (26, 28) limiteur de pression piloté, qui est intégré dans la ligne (22) de retour et qui présente une unité de valve (28) principale, sur laquelle la pression de la chambre (12) de vérin côté tige de vérin du vérin (4) de travail agit dans le sens de l'ouverture et la pression de pilotage régnant dans une chambre (31) de commande agit dans le sens de la fermeture, cependant que cette chambre (31) de commande est localisée dans un circuit de pilotage, que pendant la course de fermeture elle peut être soumise à une pression de pilotage, qui correspond à une pression de retenue dans la chambre (12) de vérin côté tige de vérin du vérin (4) de travail et qui est calibrée au niveau d'un limiteur (54) de pression de pilotage, vers lequel de l'huile de pilotage afflue pendant la course de fermeture de la ligne (22) de retour par une ligne (34) de pilotage raccordée sur la ligne (22) de retour, que pendant la course de travail elle peut être déchargée de toute pression de pilotage à l'aide d'une valve (38) de pilotage, laquelle est commandée par la pression dans la chambre de vérin côté piston, et qu'à la fin de la course de travail elle peut être soumise à une pression de pilotage, laquelle correspond à une pression d'amortissement dans la chambre (12) de vérin côté tige de vérin, **caractérisée en ce que** la pression de pilotage correspondant à la pression d'amortissement peut être obtenue par l'afflux d'huile de pilotage vers la chambre (31) de commande au travers d'une ligne (68) de déviation à partir de la chambre (10) de vérin côté piston du vérin (4) de travail, et qu'un clapet (72) anti-retour fermant dans le sens de la chambre (10) de vérin côté piston est disposé dans la ligne (68) de déviation.

2. Une commande hydraulique conforme à la revendication n° 1, **caractérisée en ce que** un gicleur (70) est disposé en série par rapport au clapet (72) anti-retour dans la ligne (68) de déviation.

3. Une commande hydraulique conforme à la revendication n° 1 ou n° 2, **caractérisée en ce que** un côté de commande de la valve (38) de pilotage, laquelle est commandée par la pression régnant dans la chambre (10) de vérin côté piston du vérin (4) de travail, peut être raccordé à une ligne (24) de pression menant vers la chambre (10) de vérin côté piston.

4. Une commande hydraulique conforme à une des revendications précédentes, **caractérisée en ce que** un gicleur (46) est disposé dans le circuit de pilotage entre l'entrée du limiteur (54) de pression de pilotage et la chambre (31) de commande de l'unité de valve (28) principale.

5. Une commande hydraulique conforme à une des revendications précédentes, **caractérisée en ce que** un gicleur (36) est disposé dans une ligne (34) de pilotage raccordée sur la ligne (22) de retour.

6. Une commande hydraulique conforme à la revendication n° 5, **caractérisée en ce que** la ligne (68) de déviation débouche dans la ligne (34) de pilotage en aval du gicleur (36).

7. Une commande hydraulique conforme à la revendication n° 6, **caractérisée en ce que** la valve (38) de pilotage, qui est pilotée par la pression dans la chambre (10) de vérin côté piston du vérin (4) de travail, est une valve à commutation, qui dans une première position de commutation relie la chambre (31) de commande de l'unité de valve (28) principale à une section de la ligne (34) de pilotage, laquelle est localisée en aval de l'embouchure de la ligne (68) de déviation, et qui dans une seconde position de commutation la raccorde à une ligne de décharge (42).

8. Une commande hydraulique conforme à une des revendications précédentes, **caractérisée en ce que** l'unité de valve (28) principale est précontrainte dans sa position de fermeture à l'aide d'un ressort (66).

9. Une commande hydraulique conforme à une des revendications précédentes, **caractérisée en ce que** dans le circuit de pilotage est disposé un second limiteur (50) de pression de pilotage, qui permet de limiter la pression de pilotage à une valeur supérieure à la valeur sur laquelle est calibré le premier limiteur (54) de pression de pilotage.

10. Une commande hydraulique conforme à une des revendications précédentes, **caractérisée en ce que** le circuit de pilotage présente une valve (58) de pilotage supplémentaire, conçue sous forme de valve à commutation, qui raccorde la sortie du limiteur (54) de pression de pilotage à une ligne (64) de décharge dans une première position de commutation et qui ferme dans une seconde position de commutation, laquelle est prise pendant la course retour du vérin (4) de travail.

11. Une commande hydraulique conforme à la revendication n° 10, **caractérisée en ce que** un côté de commande de la valve (38) de pilotage, laquelle est commandée par la pression dans la chambre (10) de vérin côté piston du vérin (4) de travail, pour la première position de commutation de la valve (58) de commutation supplémentaire est raccordé à une ligne (24) de pression, laquelle mène à la chambre (10) de vérin côté piston, et pour la seconde position de commutation de la valve (58) de commutation supplémentaire est raccordé à une ligne (64) de décharge.
